# EUROPEAN PATENT APPLICATION

(11) **EP 1 267 245 A2**
(43) Date of publication of application: **18.12.2002**
(21) Application number: 02253361.6
(22) Date of filing: 14.05.2002
(51) Int. Cl.: G06F 1/00

(54) **Storage device with cryptographic capabilities**

(30) Priority: 11.06.2001 US 878633
(71) Applicant: Plasmon LMS, Inc., Colorado Springs, CO 80907 (US)
(72) Inventor: Worby, Brian L., Colorado Springs, Colorado 80918 (US)
(74) Representative: Fenlon, Christine Lesley

(57) **Abstract**

Additional data security is achieved by incorporating cryptographic processing into a storage drive (16) which his controllable by the drive user. By utilizing user supplied keys and related information, the user can control the cryptographic processing of information and maintain its security and integrity. Further, this additional processing can be achieved without compromising the data storage capabilities of the storage drive (16). Enhanced security is further achieved through the use of a dual cryptographic process which includes both a two-way encryption/decryption process in conjunction with a one-way encryption process which is utilized to produce decryption check bytes during storage operations and to check existing decryption check bytes following storage. Added convenience is provided to the user by providing encryption capabilities while also continuously providing decryption capabilities within the storage device (30) itself.

## Description

The present invention relates to data storage devices. More specifically, the present invention relates to a storage device and method for storing data which includes user controlled cryptographic processing capabilities, thus allowing secure data storage.

With the increasing use of computers for processing sensitive personal and business information, it is becoming extremely important to provide protection mechanisms. Some examples of sensitive personal information requiring protection from unintended disclosure include medical, financial, legal and governmental records. A failure to protect these types of personal records can lead to exploitation or discrimination of an individual. Businesses also have many types of information they must protect in order to remain competitive. Things such as business e-mails, product development plans, sales information, customer information, and financial records must be maintained in confidence and protected from inadvertent or undesired disclosure. Obviously, a failure to keep sensitive business information confidential could result in grave consequences. In addition to the vast number of civilian applications that require security, there is a wide array of governmental and military systems that must be adequately protected. This information may include military secrets, governmental intelligence, or data maintained on citizens (e.g. tax information, etc.). Simply stated, the need for data protection and security exists in many different segments of our computerized society.

Sensitive information must be protected throughout all elements of a computer system, however it is most vulnerable to compromise when it resides on a storage medium. This increased vulnerability arises from the fact that data is typically stored for long periods of time, but is only actually processed for small periods of time. This disparity between processing and storage times can truly be seen in the area of data archival on certain types of write-once optical storage, where the data is guaranteed to be readable for 100 years or more. For example, in large capacity storage applications, such as storage libraries or large capacity optical disks, data is often archived and not retrieved for months or years. Further, the data storage medium (i.e. disks, tapes, etc.) can be removed from the storage device and possibly attacked or manipulated in other devices.

One mechanism to provide additional data security is cryptographic processing. Through the use of cryptographic processing, data is encrypted and/or decrypted at appropriate times in the storage process. In the past, data encryption has been approached many different ways. These various approaches have included software encryption, hardware encryption, or a combination of both.

One approach is to create encryption capabilities is to provide cryptographic processing within an application. These applications are configured to encrypt generated data within the application prior to storing. The application also works in reverse to automatically decrypt the data whenever a file is read. An example of an application with encryption capabilities is Microsoft Access from Microsoft Corp. of Redmond, Washington.

While the use of an application to provide encryption is certainly easy for the user to implement, it is also more vulnerable to certain types of attacks on the data. For example, timing attacks, and brute force processing attacks are more easily accomplished. Further, malicious logic (e.g. viruses and "trojan horses") can be attached to the application, thus possibly compromising the effectiveness of the application. Naturally, any other user that has the same application may be able to retrieve and decrypt the data without authority by determining the necessary encryption keys.

A second approach to data encryption involves the use of a separate application to provide data encryption. In operation, a data file is provided to the encryption application, and an encrypted file is produced in return. Encryption Plus Personal by PC Guardian of San Rafael, CA, is an example of a stand-alone application that is used to perform cryptographic processing on a file. The use of an encryption application also has some risk or vulnerability, as mentioned above. Also, the user must maintain an additional application on their system requiring processing resources and time.

Yet another approach utilizes an encryption device driver within the host computer. An example of a cryptographic device driver is Pointsec TM by Protect Mobile Technologies of Walnut Creek, CA. With a cryptographic device driver, storage transactions are intercepted within the host computer and encryption/decryption processing is performed on the data via software executing in the host processor.

As a hardware solution, a cryptographic coprocessor may be used to coordinate encryption/decryption operations. An IBM S/390 CMOs Cryptographic Processor is an example of a hardware unit that supplies cryptographic services, and is interfaced to the main processor. A hardware cryptographic unit works very similarly to a cryptographic device driver, with the exception that the encryption/decryption is done via hardware rather than software.

Lastly, a device residing in the data channel could easily be used to provide encryption capabilities. An example of a cryptographic device residing in the communications channel between the host computer and the storage device is the MaxLock HD 100 by Micro Systems Design of San Jose, CA. A cryptographic device residing in a communications channel works simply by encrypting the data on the channel flowing in one direction and decrypting data flowing in the other direction.

Each of these approaches are external to the storage device, which is disadvantageous. Again, some additional processing time is required for cryptographic processing during the storage and retrieval operations, even prior to being transferred to the storage device. Additionally, the cryptographic processing is placed in a location (i.e. on the computer, or in the storage bus) where it is susceptible to attacks. For example, the data is more susceptible to "brute force" attacks (i.e. continued attempts to decrypt the data by experimenting with different cryptographic keys) because the encrypted data is accessible to an attacker. This accessibility also makes the data subject to any number of other types of data attacks or cryptanalysis. The data may also be vulnerable to timing attacks as the decryption process, or decryption times, are not necessarily hidden. This would allow a potential attacker to determine additional information about the type of cryptographic processing being done. Data encryption using many of the methods above are also susceptible to viruses or malicious logic, again because the encryption process is accessible to attackers.

It is also obvious from the discussion above that each of these approaches to cryptographic processing require some additional hardware or software. In addition to the time required for this hardware/software to carry out the necessary cryptographic processing, these additional products must be maintained and incorporated into the computer - a task which undoubtedly requires resources.

Certain data storage devices have incorporated some ability to perform decryption of previously encrypted data in an effort to prevent the copying of DVD disks. These devices do not have the ability to perform encryption of data however, and are primarily intended for mass distribution type applications (e.g. movies and other audio-visual works mass marketed to the public). Many DVD players include a feature known as a Content Scrambling System. In operation, this system reads certain keys from the non-user area of the disk and provides this information to the hardware decryption unit in the DVD player. These keys are provided by the publisher and cooperate with the embedded decryption processes. The user has no involvement with the decryption process. Most significantly, these systems do not provide the user/operator with any mechanisms to protect their data.

Preferred embodiments of the present invention seek to provide a more efficient, user-friendly and secure data encryption and decryption. Accordingly, the device and method of the present invention preferably places all cryptographic processing within the data storage device itself. This allows the use of additional cryptographic processing to enhance the level of security achieved, provides user control of cryptographic operations, and allows fast efficient data storage.

In a storage device embodying the present invention, a cryptographic processor is included within the storage device to perform both encryption and decryption operations. The cryptographic processor communicates with the host to appropriately switch between cryptographic and non-cryptographic modes. Further, the cryptographic processor receives at least one user supplied key that is used in the encryption/decryption process. Once appropriate commands are received, the cryptographic processor cooperates with other components in the read channel and the write channel of the storage device to accomplish encryption and decryption that is invisible to the host computer or the user.

By implementing cryptographic processing within a data storage device, cryptographic operations are made more convenient for the user. With the cryptographic algorithms embedded in the storage device, there are no separate programs or hardware devices that need to be set up and utilized for cryptographic processing to occur. When the users want to encrypt or decrypt data, they must simply supply the correct key to the data storage device and then perform data transfers as normal. Convenience is also enhanced, as users always have the means to decrypt the data as long as they have a compatible data storage device. That is, so long as a user has a storage device with the necessary cryptographic processing capabilities, decryption can be easily performed. With other means of cryptographic processing, there is always the possibility that when some feature is upgraded, the ability to decrypt previously stored data may cease to exist.

There are at least three potential benefits to be gained by implementing cryptographic processing in a data storage device: (1) encryption processing is more secure when it is implemented internally rather than external to the storage device; (2) the encrypted data can be made less susceptible to brute-force attack; and (3) there is an added convenience, in that as long as the users have the device to retrieve the stored data, they also have the means to decrypt the data.

Encryption of data inside a storage device is more secure, because the likelihood of encountering "malicious" logic within an embedded system is extraordinarily small. The ability to develop a computer "virus" or "Trojan Horse" to alter cryptographic processing on a host computer is well within the capabilities of many people, whereas very few people have the capability of inserting "malicious" logic into an embedded system. Those capable of altering an embedded system would typically have had access to proprietary resources or would have had to expended considerable resources to reverse engineer the product. Performing decryption within an embedded system also increases security by hiding the time required for decryption within the overall data transfer time. By hiding the data decryption time, the cryptographic key is impervious to timing attacks.

The data can be protected from brute-force attacks by only allowing data transfers to occur for certain encryption keys. Since many data storage devices write control information (such as error correction) that correlates to user data, it is possible to write a few extra bytes (decryption check bytes) that are the output of a one-way encryption algorithm applied across a block of user data. The device could be made to transfer data only if the stored decryption check bytes match the output of the one-way encryption algorithm when it is applied to the decrypted user data. A match does not necessarily mean that correct decryption has occurred as that would require bit for bit comparison of the decrypted data with the original data. Checking against the decryption check bytes does identify incorrect decryption in a large number of cases however, and further protects against attacks. For example, if a 64-bit key is used and 4-bytes (32-bits) are used as the decryption check bytes, only 1 key out of approximately every four billion keys should result in the correct decryption check bytes, and the chances of that being the correct key are about one in four billion. Since brute-force attacks rely upon sheer processing power, they can be significantly impeded by denying the encrypted data to the attacker for as long as possible. The attacker could attempt to use the storage device to perform the brute-force attack, however it would be orders of magnitude slower than trying to do it with a processor, as device access times must be factored in.

Additional convenience and control is provided by giving the user control over the cryptographic operation and keys used. In this way, the user has ultimate control over the encryption and decryption of data stored on the particular data storage device. This differs from previous storage methodologies where certain encryption has been achieved by the organization which has stored the data, such as a publisher. Using the system and method of the present invention, the user has the opportunity to decrypt the data but can also control whether encryption is used. Consequently, the methodology of this invention does provide a mechanism for the user to actually encrypt and protect their data.

In order to maintain compatibility, the storage device of the present invention continues to cooperate with a host processor. In one embodiment, communication is achieved using the small computer system interface (SCSI). Naturally, other interfaces or communication methods are possible including serial bus, USB, specialized ports, removable memory card apparatus (PCMCIA, Flash card, etc.), network connections, etc. Also, while the terms host computer, computer system or host processor are used throughout the application, these terms are intended to cover any device or system that has secure storage needs. This may include storage systems, stand alone dedicated devices with an embedded processor, network attached storage devices, etc. Utilizing the desired interface, only a small number of additional commands are necessary in order to obtain the cryptographic functionality desired. Specifically, commands are added to set and validate the cryptographic keys. Similarly, read and write commands are slightly modified to include decrypt and encrypt bits, respectively. These additional and/or modified commands provide the user with the ability to control cryptographic processing as desired. This also provides added security by selectively encrypting information.

The method and device of the present invention provide several advantages in the secure data storage area. Preferred embodiments of the invention provide additional security by embedding all cryptographic processing within the data storage device. It is also desirable for the present invention to give control of the cryptographic processing to the user.

Embodiments of the present invention may advantageously provide added security by implementing decryption check bytes into the storage methodology. This method of cryptographic processing provides for added security within the data storage process.

For a better understanding of the present invention, and to show how the same may be carried into effect, reference will now be made, by way of example, to the accompanying drawings, in which:-
Fig. 1 is a schematic drawing illustrating the storage context for the encryption of the present invention;
Fig. 2 is a flow chart illustrating the process for recording data;
Fig. 3 is a flow chart illustrating the process for retrieving data;
Fig. 4 is a data flow diagram illustrating the storage device of an embodiment of the present invention during storing operation; and
Figure 5 is a data flow diagram illustrating the storage device during retrieval operations.

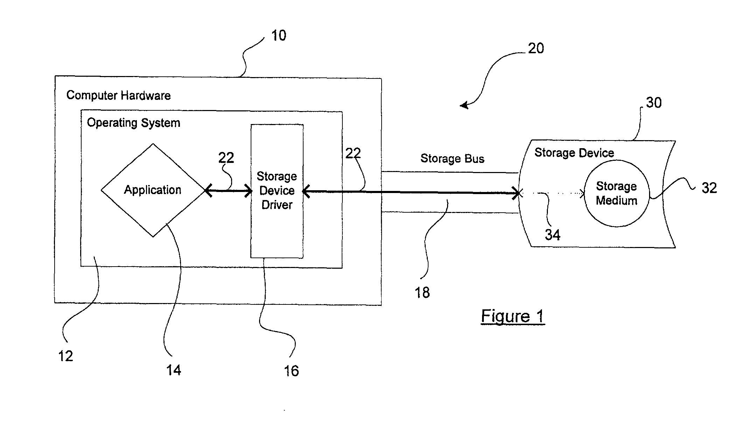

Referring now to Figure 1, there is shown a schematic diagram illustrating the overall operation of the present invention. As is well known, a computer or piece of computer hardware 10 contains an operating system 12 and any number of applications 14. Among other things, the application 14 typically requires some interaction with a storage device 30 so that data can be stored and retrieved in a desired fashion. In order to accommodate the cooperation between the application 14 and storage device 30, the computer 10 includes a storage device driver 16, which coordinates all storage operations. Storage device driver 16 receives data from application 14 with instructions to store that particular data in a certain fashion. Storage device driver then communicates over a storage bus 18 with storage device 30. Together, the computer 10 and storage device 30, along with accompanying storage bus 18 makes up a computer system 20 which is capable of many different operations and functions. As is well known, application 14 could include any number of programs including word processors, database programs, spreadsheets, financial software, internet communication software, etc. Clearly the schematic diagram shown in Figure 1 is only one exemplary embodiment of a computer system 20. As is well known, additional components could easily be added depending on the needs of computer system 20. For example, additional storage devices may be included, printers, communication modems, etc. In the present application, computer system 20 is intended to be very flexible and embody many different configurations.

As previously mentioned, there is often a need to provide encryption for information that is used within computer system 20. In the present invention, it is anticipated that non-encrypted data 22 will be transferred between application 14 and storage device 16 across storage bus 18. This allows the most flexibility for data processing within computer system 20 and minimizes the risk of hacking the cryptographic algorithm and the compromise of data security. While there is some risk that the data could be attacked prior to storage, the overall security of the data is maximized by insuring that all stored data is appropriately protected.

Storage device 30 receives non-encrypted material 22 from storage bus 18, and then internally provides mechanisms to encrypt the data prior to storage on a storage medium 32. Stated alternatively, storage device 30 includes the necessary components to perform cryptographic processing of data. This transformation creates encrypted data 34, which is stored on storage medium 32 within storage device 30. It is anticipated that storage medium 32 would include removable storage devices such as optical disks, magnetic disks, magnetic tape, and other storage media. By using the encryption method of the present invention, any data contained on storage medium 32 would then be protected and readable by only the specific storage device 30 used for storage, or other appropriately coordinated storage devices. As an alternative embodiment, the storage device 30 of the present invention could include a hard disk drive, which would be capable of storing encrypted data utilizing the encryption methods described herein.

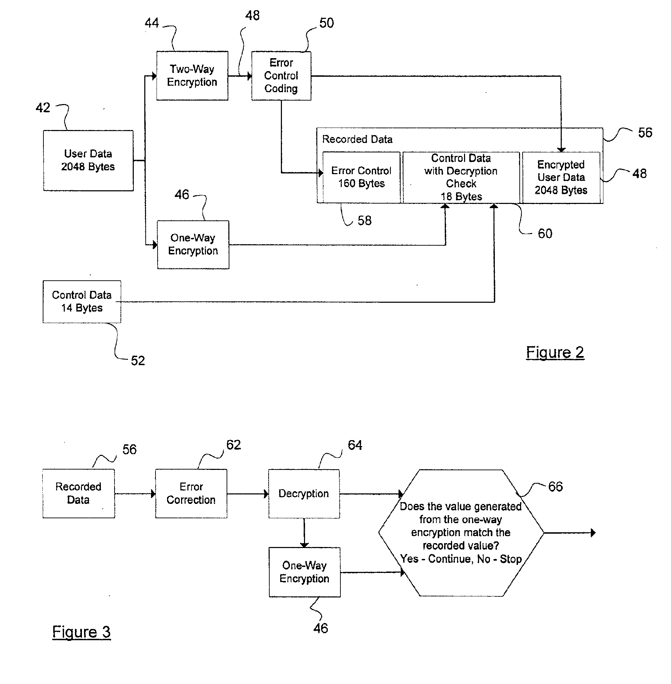

In order to provide additional data security, the methods and devices of the present invention utilize a two-phase encryption methodology. Similarly, a two-phase decryption methodology is utilized to achieve this additional level of security. Referring to Figures 2 and 3, there are shown flow diagrams which illustrate the two-phase encryption/decryption methodologies utilized. More specifically, Figure 2 illustrates the formatting/encryption of data for storage, while Figure 3 illustrates the decryption methodology for retrieving data encrypted according to the method of Figure 2.

Referring now specifically to the flow diagram shown in Figure 2, the process begins when user data 42 is provided to the encryption device within storage device 30. User data 42 (which corresponds with unencrypted data 22 discussed above) is simultaneously presented to a two-way encryption process 44 and a one-way encryption process 46. Two-way encryption process 44 may include several well-known encryption methodologies. For example, the Rijndael Algorithm, or Advanced Encryption Standard (AES), is utilized in one embodiment of the present invention for two-way encryption. (AES is administered by the National Institute of Standards and Testing (NIST).) Two-way encryption process 44 produces encrypted data 48 which is presented to an error control coding process 50.

One-way encryption process 46 provides a simultaneous encryption methodology to the user data and produces a number of decryption check bytes. Further details of the one-way decryption algorithm are outlined below.

In addition to the user data 42, control data 52, which is generated by storage device 30, is also stored on the storage medium. As can be seen in Figure 2, all of these processes are combined to generate recorded data 56 which includes various components. More specifically, these components include error control bytes 58, control data with decryption check bytes 60, and the encrypted user data 48. The recorded data 56, or record 56, is then stored on storage media 32 for later retrieval.

Referring now to Figure 3, there shown the process for the retrieving and decryption of user data. Recorded data 56 is first presented to error correction process 62 to correct for any recording errors. Next, the corrected data is provided to decryption process 64. Decryption process 64 is a companion to two-way encryption process 44 such that the decryption process is essentially reversed. This provides decrypted data which is then provided to a check bytes evaluation process 66, and to the one-way encryption process 46. The previously produced check bytes are also parsed from the stored data. The one-way encryption process 46 is identical to that utilized during the recording of data outlined in Figure 2. One-way encryption process 46 again produces check bytes (the second check bytes), which are provided to check byte evaluation process 66. Check byte evaluation process 66 analyzes whether or not the check bytes produced match the recorded value. If this is true, (i.e. the check bytes match) that suggests that correct decryption has occurred and the correct keys are being used. Based on these conclusions, the information is returned to the user.

In the preferred embodiment, data transfers in cryptographic mode are performed by a user taking the following actions: The desired cryptographic key would be set into the data transfer buffer of the host computer. The key would then be set in the drive by means of a Set Key command. Upon successful completion of the Set Key command, a Validate Key command would be sent to verify that the key was correctly loaded into the drive. These steps would put the drive in cryptographic processing mode. Once the key has been validated, the user would perform as many reads and writes as desired, setting the Encrypt/Decrypt bits in the commands to reflect how the data should be handled. Upon completion of data transfer operations, the Set Key command would be issued with the Clear bit set, in order to zero out the cryptographic key and remove the drive from cryptographic mode. As outlined, cryptographic processing can be implemented in a fashion that is simple to use and conforms to established interface standards. Obviously, modifications could be made to this process while continuing to achieve the overall protection scheme.

The two-way algorithm is the main algorithm that is used for encrypting the data to be stored and decrypting the retrieved data. It is essential that the two-way algorithm generates an output that is the same size as the input. The Rijndael algorithm is a preferred two-way encryption algorithm as it has many of the characteristics desired for this application (e.g., key sizes of 128, 196, and 256 bits, symmetric algorithm, simplicity, implementation flexibility, and suitability for 8-bit processors). The fact that the Rijndael algorithm uses a minimum key-length of 128 bits, means that data encrypted with it should remain secure for at least 100 years. Since Rijndael is a symmetric algorithm, it is able to offer more security than an asymmetric algorithm given the same key size. A symmetric algorithm uses the same key for encryption and decryption. an asymmetric algorithm uses one-key (the public key) for encryption and another key (the private key) for decryption. A 128-bit symmetric key is about as secure as a 2304-bit asymmetric key. Additionally, the Rijndael algorithm displays high performance operation relative to other encryption algorithms.

The one-way encryption algorithm is the mechanism that is used for generation of the decryption check bytes. In the preferred embodiment, three primary criteria are desired for the one-way algorithm: the algorithm must be fast, it will preferably generate a result having a designated number of output bytes, and it must generate a transformation as a result of the input data and the key. A number of existing algorithms, including the Secure Hash Algorithm (SHA), Snerfu, N-Hash, and Message Digest 5 (MD5), are possible, but none of them possessed all of the desired characteristics. Most existing one-way algorithms appear to be geared towards things such as digital signatures and as such, use a smaller input and generate a larger output than desired. In order to meet the desired characteristics, a new algorithm was developed for the preferred embodiment. While this new algorithm is preferable, any number of one-way description algorithms can be used without departing from the spirit of the present invention.

In the preferred embodiment the one-way algorithm is a high-speed process which reduces 2048 bytes of data into a 4-byte value based upon a supplied 128-bit encryption key. In the algorithm 2048 bytes are used for the input, a 128-bit encryption key, and a 4-byte output is used, however the algorithm could easily be modified to use other input sizes. The algorithm consists of two functions, one for setting up the algorithm and another for actually performing the hashing.

A Set Key function is responsible for setting up rotate counts used in the algorithm based upon the supplied encryption key. A 128-bit key is sent into the Set Key function, where it is broken up into 5-bit chunks. Each set of 5 bits is loaded into 1 of 25 rotate control registers, to produce a rotate count between 0 and 31. Since only 125-bits of the key are used for setting the rotate counts, the remaining 3-bits are discarded.

As mentioned above, the one-way algorithm reduces the 2048-byte input into a 4-byte output. Each 4-bytes of input is used to create a double word. Upon creation of each double word, the contents are rotated to the right by the bit count in the current rotate control register. Each rotate control register is used in a sequential fashion for one double word rotation, until the last register been used, at which point the sequence is restarted with the first register. Upon completion of the double word rotation, the results are exclusive-or'd with the previous results. The final hash value is the result of the 512 exclusive-or'd and rotated double word inputs. Once again, other one-way algorithms are possible for use in the present invention.

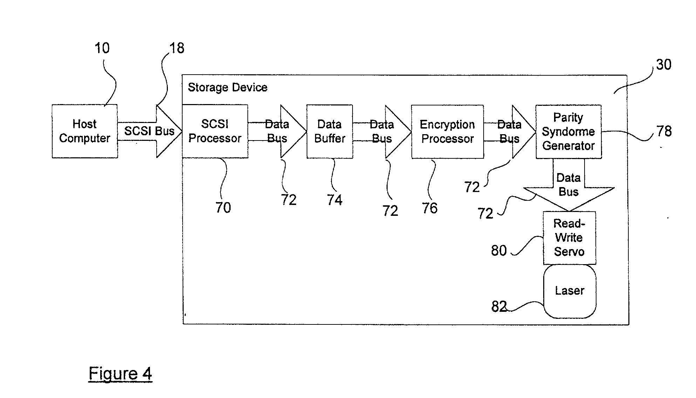

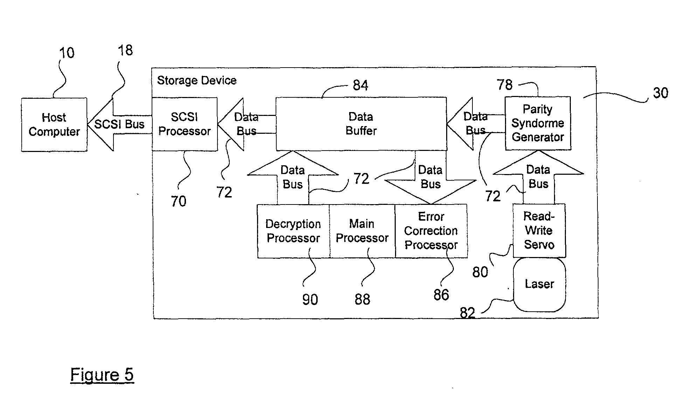

Referring now to Figures 4 and 5, there are shown more specific data flow diagrams for the storage and retrieval of information. Specifically, Figure 4 illustrates the data flow of information within storage device 30 during a data storage operation. As can be seen, computer 10 provides information via storage bus 18 to the storage device 30. As previously mentioned, the preferred embodiment utilizes a small computer system interface (SCSI) to communicate between storage device 30 and computer 10. Naturally, any number of other communication mechanisms could be used such as a serial bus, USB, specialized port, removable memory apparatus (flash card interface, PCMCIA, etc.), network connection or other communication methods. In the scheme illustrated in Figure 4, a SCSI processor 70 will receive the necessary information and commands from computer 10. An internal data bus 72 will then transfer information to a data buffer 74. The information to be stored is then transferred to encryption processor 76 which carries out all of the above referenced encryption processes. Next, the encrypted record is passed to parity syndrome generator 78 and ultimately via read/write servo 80 to laser 82. Laser 82 is then utilized to write the information to optical storage medium 32.

A somewhat similar process is utilized to read data from storage medium 32. Once again, laser 82 is utilized to read the stored information in conjunction with a read/write servo 80. This read information is then passed via data bus 72 to parity syndrome generator 78. Following the processing within parity syndrome generator 78, data is then passed to a data buffer 84 which cooperates with an error correction processor 86, a main processor 88, and a decryption processor 90 to perform the decryption processes outlined above. Data buffer 82, is then capable of transferring data via data bus 72 back to the SCSI processor 70 and ultimately to host computer 10.

In one approach, separate encryption and decryption chips (i.e., programmable logic, ASIC, or similar chips) can be used for implementing cryptographic processing. The encryption chip would reside in the write data path between the Data Buffer, and the Parity Syndrome Generator 78. By placing the encryption chip before the Parity Syndrome Generator 78, the encrypted data is covered by the drive's Error Correction Coding (ECC) scheme. A failure to encrypt the data before applying the ECC, could result in undecipherable read data. Operation of the encryption chip would be essentially automatic whenever writes to disc are occurring, provided the drive is in cryptographic mode. Due to the fact that the error correction is typically done by a main processor in the drive, the decryption chip would have to exist essentially as a co-processor on the main data bus. When non-zero syndromes are generated by the Parity Syndrome Generator 78 during a read, the main processor must go into the Data Buffer, and perform the error correction, based upon parameters supplied by the ECC chip. Once error correction is performed, the main processor would instruct the decryption chip to decrypt the appropriate sector. An attempt to decrypt a sector before error correction has been performed, could result in undecipherable data.

While the preferred embodiment has distributed processing tasks to various components, it is understood that this distribution could be accomplished in different ways. For example, it is possible that encryption and decryption could be done through one chip. Other modifications can be made, depending on other design criteria for the storage device 30. For example, cryptographic processing could be accomplished in software or an expansion slot added to the drive. This opens up the possibility of further customizing the cryptographic processing.

Additional security is provided by implementing cryptographic processing in storage device 30 by protecting against a brute-force key attack. For example, an attempt to perform a brute-force key attack on storage device 30 by repeatedly reading the same sector with different cryptographic keys, could be performed at a rate of 60 milliseconds (ms) per attempt. The rate at which attempts can be made is strictly governed by the rotational latency of storage device 30. In an embodiment where a storage disc rotates at a rate of 16.67 Hz, there are only 16.67 opportunities per second to read a particular sector. The time required to change the decryption key does not factor into the time per attempt, as the 3.2 ms required to change the key is significantly smaller than the 60 ms rotational latency. With a 4-byte decryption check value, it should on average, take approximately 2 billion attempts before a randomly chosen key produces decrypted data that will produce the correct decryption check bytes. On storage device 30, 2 billion reads of a single sector would take approximately 4.1 years. The same brute-force attack on data residing in memory on a 500 MHz Intel Pentium III™ equipped PC, could be accomplished in approximately 150 days. Without even adding any additional security logic, storage device 30 provides an additional factor of 10 with regard to security in the face of a brute-force key attack over a mid-range PC. Additional security mechanism could easily be added to increase the security even further. Simply adding a 2-second delay in the storage device 30 whenever incorrect decryption check bytes are detected would increase the 4.1-year time span to 140 years.

Those skilled in the art will further appreciate that the present invention may be embodied in other specific forms without departing from the spirit or central attributes thereof. In that the foregoing description of the present invention discloses only exemplary embodiments thereof, it is to be understood that other variations are contemplated as being within the scope of the present invention. Accordingly, the present invention is not limited in the particular embodiments, which have been described in detail therein. Rather, reference should be made to the appended claims as indicative of the scope and content of the present invention.

## Claims

1. A secure storage device for storing and retrieving information in response to storage or retrieval commands, comprising:
an interface for receiving the commands and information;
a cryptographic processor for performing data encryption and decryption, wherein the data encryption includes a two-way encryption process which produces encrypted data when applied to the data and a one-way process which produces at least one initial check value when applied to the data, and wherein the decryption utilizes the two-way encryption process to produce data and the one-way decryption process to produce at least one decrypted data check value, wherein the decrypted data will not be transferred unless the at least one initial check value and the at least one decrypted data check value match; and
a storage system, including a storage medium, for the storage and retrieval of the encrypted data and at least one initial check value.

2. The secure storage device of claim 1 wherein the two-way encryption process is a Rijndael algorithm.

3. The secure storage device of claim 1 or 2 wherein the storage or retrieval commands include a cryptographic key.

4. The secure storage device of any preceding claim wherein the initial check value and the decryption value are 4 bytes long.

5. The secure storage device of any preceding claim wherein the cryptographic processor can be disabled.

6. The secure storage device of claim 3 wherein the one-way processes produces the initial check value and the decryption check value by applying a hash algorithm which utilizes the cryptographic key.

7. The secure storage device of any preceding claim wherein the storage device is an optical disc drive and wherein the storage medium is a removable storage disc.

8. The secure storage device of any one of claims 1 to 7 wherein the interface is a SCSI interface.

9. The secure storage device of any one of claims 1 to 7 wherein the interface is a communication bus.

10. The secure storage device of any preceding claim wherein the cryptographic processor comprises an encryption chip and a decryption chip.

11. The secure storage device of claim 10 wherein the encryption chip and the decryption chips are programmable logic devices.

12. The secure storage device of claim 10 wherein the encryption chip and the decryption chips are each an ASIC.

13. The secure storage device of any preceding claim wherein the storage system stores both the encrypted data and initial check value on the storage medium.

14. The secure storage device of claim 13 wherein the storage system retrieve both the encrypted data and the initial check value during the retrieval of information so that the initial check value can be compared against the generated decryption check value.

15. A method of securely storing data in a data storage device in response to a storage request so that the securely stored data cannot be retrieved without authorization, comprising:
(a) receiving data to be stored and an encryption key from the host computer;
(b) encrypting the data using a two way encryption process and the encryption key;
(c) generating an initial decryption check value using a one way encryption process and the encryption key; and
(d) storing the encrypted data and the initial decryption check, thus providing the capability to prevent the retrieval of information unless the initial decryption check value matches a later generated decryption check value.

16. The method of securely storing data of claim 15 wherein the later generated decryption check value is generated by decrypting the encrypted data using the two way encryption process and a decryption key to produce decrypted data, and applying the decrypted data and the decryption key to the one way encryption process, thus producing the later generated decryption check value.

17. The method of securely storing data of claim 16 wherein the decryption key is provided as part of a request for retrieval.

18. A method of retrieving securely stored data which includes encrypted data and an initial decryption check value in response to a retrieval request, comprising:
(a) retrieving the encrypted data and the initial decryption check value;
(b) decrypting the encrypted data using a two way encryption process which was also used to encrypt the data and a decryption key supplied as part of the retrieval request;
(c) generating a second decryption check value by applying the decrypted data and the decryption key to a one way encryption process; and
(d) providing the decrypted data if the initial decryption check value and the second decryption check value are equal.

19. The method of retrieving securely stored data of claim 18 wherein the decryption key is provided as part of a request for retrieval.

20. A method for the secure storage and retrieval of data in a storage device, comprising:
(a) receiving data to be stored and an encryption key;
(b) encrypting the data using a two way encryption process and the encryption key;
(c) generating an initial decryption check value using a one way encryption process and the encryption key;
(d) storing the encrypted data and the initial decryption check, thus providing the capability to prevent the unauthorized retrieval of information unless the initial decryption check value matches a later generated second decryption check value;
(e) in response to a request for retrieval which includes a decryption key, retrieving the encrypted data and the initial decryption check value;
(f) decrypting the encrypted data using the two way encryption and the decryption key provided in the request for retrieval;
(g) generating the second decryption check value by applying the decrypted data and the decryption key to the one way encryption process; and
(h) providing the decrypted data if the initial decryption check value and the second decryption check value are equal.
